# EUROPEAN PATENT SPECIFICATION

(11) **EP 0 498 110 B1**
(45) Date of publication and mention of the grant of the patent: **21.08.1996**
(21) Application number: 91310440.2
(22) Date of filing: 12.11.1991
(51) Int. Cl.: F16L 41/00

(54) **Improved band with slotted wedge cams**
Verbesserte Bandschelle mit keilförmigen, geschlitzten Nocken
Collier de serrage amélioré pourvu de cames biseautées muni de rainures

(30) Priority: 08.02.1991 US 652813
(43) Date of publication of application: 12.08.1992
(73) Proprietor: NPC, INC., Milford New Hampshire 03055 (US)
(72) Inventor: Gundy, William P., Milford, New Hampshire 03055 (US)
(74) Representative: Quest, Barry

(56) References cited:
- US-A- 3 958 313
- US-A- 4 478 437
- US-A- 4 711 455
- US-A- 4 890 863

## Description

### Background of the Invention

### Field of the Invention

This invention generally relates to sealing arrangements for pipe joints and more specifically to an improved clamping device for effecting a seal between a pipe and a manhole.

### Description of Related Art

Various proposals exist for connecting pipes to manholes in sewer systems. For example, United States Letters Patent No. 3,958,313 for a Method, Apparatus and Product for Improved Pipe-to-Manhole Sealing issued May 25, 1976 to the same assignee as the present invention discloses an underground joint between a sewer pipe and a reinforced concrete manhole riser. A flexible boot slips over the free end of the pipe and an external clamp compresses the seal onto the pipe to produce a boot-to-pipe seal. The other end of the boot penetrates an aperture in a manhole through a normally core-drilled opening in a riser wall. The end of the boot fits in the aperture. A clamping assembly with a clamping band and an integral toggle expander fits inside the boot in alignment with the riser wall. When the toggle expander is operated, it expands the band into the boot and compresses the boot against the riser to produce a boot-to-riser seal.

Occasionally it is necessary to remove the connector from the riser because of improper installation of the seal or an incorrectly sized clamping assembly. In these cases both the clamping band and toggle, that constitute an integral unit, had to be replaced.

Core drilling through a concrete riser wall produces a porthole of nominal diameter, but occasionally because of core drill outer roundness caused by damage, the actual size will vary from site to site. Optimal sealing must occur over the entire range of variations. It is difficult to achieve optimal sealing with the toggle and clamp of either of the foregoing references if the hole size variations exceed a narrow range.

Another construction of a clamping band for sewer pipe applications utilizes wedge-shaped cam members for acting with followers on a clamping band. As disclosed hereinafter, this approach is more readily accommodates a wider range of hole size variations. Essentially two wedge-shaped members are drawn together by a bolt and nut. The cam members drive follower members, affixed to the band, circumferentially apart. Although this structure has been available for a number of years and provides superior sealing to the toggle structures, it has not been widely accepted, particularly with compression bands for smaller diameter pipes, because the costs of such structures are not justified for smaller diameter pipes. In part this cost reflects a need to maintain an inventory of separate clamping structures for each pipe diameter. Thus, two basic clamping band structures continue to be used and for smaller pipes, optimal sealing force are compromised for reduced costs.

### Summary

Therefore it is an object of this invention to provide an expansible clamping band with a wide range of clamping adjustments. This object is achieved by the features of claim 1.

It is another object of this invention to provide an expansible clamping band that is less expensive to manufacture.

Yet another object of this invention is to provide an expansible clamping mechanism that is economical to utilize and accommodates a wide range of pipe sizes.

In accordance with this invention, an improved operating mechanism for a clamping band includes first and second follower means that are inserted into the ends of a clamping band and captured thereby. First and second wedge members with divergent edges engage corresponding divergent edges of the follower means and are aligned along an axis transverse to a center line that extends circumferentially along the center of the clamping band. Compression means pull the wedging means together along the transverse axis toward the center line. The wedging means coact with the follower means to separate the ends of the clamping band thereby to increase the separation between the first and second ends of the clamping band and produce a sealing force.

### Brief Description of the Drawings

This invention is pointed out with particularity in the appended claims. The various objects, advantages and novel features of this invention will be more fully apparent from a reading of the following detailed description in conjunction with the accompanying drawings in which like reference numerals refer to like parts, and in which:
FIG. 1 is a perspective view of a sewer pipe and manhole riser sealably joined together by means of a connector boot of the type illustrated in FIG. 2 and adapted for utilizing a connector band and expansion mechanism as shown in Figs. 4 through 7;
FIG. 2 is an exploded view showing, in perspective, sealing joint components of one embodiment in the prior art;
FIG. 3 is an exploded view showing another embodiment of an expansion mechanism of the prior art;
FIG. 4 is an exploded view of an expansion mechanism constructed in accordance with this invention;
FIG. 5 is an exploded view of a compression band with an expansion mechanism that is adapted for use with this invention;
FIG. 6 is an enlarged assembled plan view of the expansion mechanism as shown in Fig. 5; and
FIG. 7 is a cross-sectional view of the connector boot adapted for use with the expansion mechanism in Figs. 4 through 6.

### Description of Illustrative Embodiments

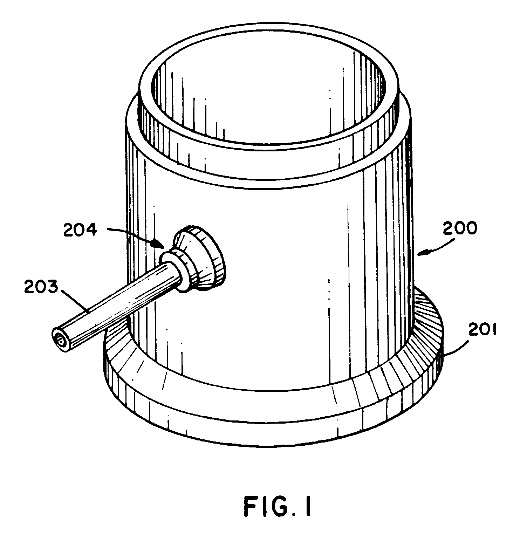

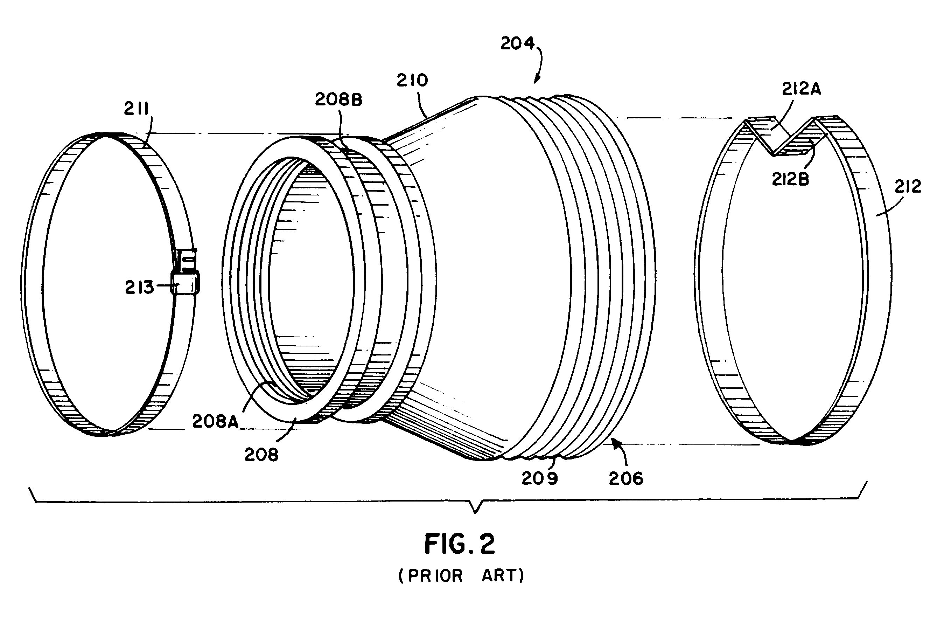

FIGS. 1 and 2 correspond to FIGS. 16 and 18 in U.S. Letters Patent No. 3,958,313 and also use the same reference numerals. By way of background, FIG. 1, discloses a manhole riser 200 mounted on a base 201 and having formed therein, by core drilling or other similar procedure, a port hole into which the extremity of a pipe 203 is inserted. The outer diameter of the pipe 203 is appreciably smaller than the inner diameter of the port hole.

The pipe 203 and the riser 200 are held in a sealably joined relationship by a clamp pipe connector boot assembly generally denoted by arrow 204. The connector boot assembly 204 and a clamping band of the prior art are shown in more detail removed from the riser and pipe in FIG. 2.

As shown more clearly in FIG. 2, the connector boot 204 comprises an elongated, flexible tubular body having an internal clamping end 206 of a cylindrical shape and size suitable for loosely engaging within a porthole. Located around the outer surface of the clamping end 206 are spaced beads or ribs 209 which are deformable under pressure to fill in irregularities in the riser porthole edge in the fully clamped position.

Pressure is exerted against the clamping end 206 by an internal clamping band 212 which includes a toggle expander device consisting of toggle arms 212A and 212B. The band and toggle arms can be forced into a position in which they are essentially aligned such that the band 212 becomes expanded under relatively high pressures and the end 206 of the connector boot 204 is thereby compressed solidly against the porthole edge. When an external device forces the toggle expander arms 212A and 212B into an aligned position, the toggle arms move outwardly and radially of the porthole and provide an over-center travel which positions the arm in a self-locking position so they constantly maintain pressure on the clamping band 212.

At its opposite extremity, the tubular connector body 204 is formed with an external clamping end 208 also of a cylindrical shape, but appreciably smaller than the end 206 so as to loosely engage around the outer periphery of the pipe 203 in FIG. 1. This end 208 is also formed with a series of beads 208A. An external clamping band 211 located in a channel 208B is solidly clamped by screwdriver pressure exerted through a tightening screw 213. This pressure deforms the beads 208A and clamps the end 208 in tightly sealed relationship around the pipe.

Extending between the parts 206 and 208 of the connector boot is an intermediate flexible tubular body portion 210 which is of a gradually decreasing size and designed to yieldably join the parts 206 and 208 together so that relative movement of one to the other may take place under varying stress forces.

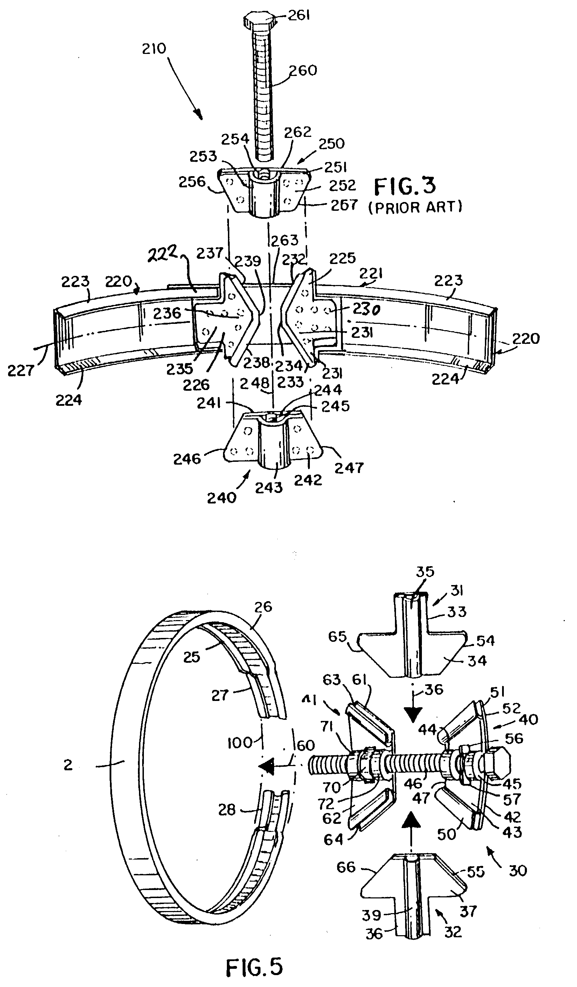

FIG. 3 discloses an expansion mechanism 210 of the prior art for use in producing a seal. The expansion mechanism 210 interacts with a clamping band 220, a portion of which is shown in FIG. 3 that has end sections 221 and 222 and has circumferentially extending inwardly turned lips 223 and 224 for radial strength. The end sections 221 and 222 receive stamped, metal wedge followers 225 and 226 that are welded to the end sections 221 and 222 respectively. These wedge followers extend generally along a circumferential center line 227 through the band 220.

Referring to the wedge follower 225, a shank 230 fits between the lips 223 and 224. A trapezoidal head 231 has edge structures 232 and 233 that diverge from an apex 234 on the circumferential center line 227. The edge structures 232 and 233 diverge as they extend toward the shank 230. One base of the head 231 abuts the edges of the lips 223 and 224 and a portion of the band 220 backs the head portion 231. The edge structures 232 and 233 have a channel-like shape.

The wedge follower 226 has a similar construction with a shank 235, a head 236, and divergent edges 237 and 238 that extend back from an apex 239. Both the wedge followers 225 and 226 are permanently welded to the band 220 during its manufacture.

The wedge expansion system also includes a driving wedge or cam 240 that has a general shape of a trapezoid formed by an outer plate 241 and inner plate 242 that are welded together. The inner plate 242 includes a saddle 243 that forms a cylinder 244 with the outer plate 241. The cylinder 244 is tapped to provide internal threads 245. The wedge 240 additionally has diverging edges 246 and 247 that taper outward from a transverse center line 248, the minor side of the trapezoidal wedge member 240 facing the band and being parallel to the center line 227.

A complementary driving wedge 250 has an outer plate 251 and an inner plate 252 with a central saddle 253. The saddle forms a cylinder 254 that is counterbored. Divergent edges 256 and 257 extend outwardly and transverse to the center line 248. A bolt 260 passes through the clearance hole 254 in the driving wedge 250 and engages the threads 245 in the wedge 240. Divergent edges 246 and 247 engage the channels 233 and 238 respectively of the wedge followers 226 and 235. Similarly the divergent edges 256 and 257 of the driving wedge 250 engage the divergent edges 237 and 232 of the wedge followers 226 and 225. As the bolt 260 tightens, the bolt head 261 engages an upper edge 262 of the driving wedge 250 and the driving wedges 240 and 250 are drawn together and toward the center line 227. This causes the followers 225 and 226 to be displaced circumferentially apart in a direction parallel to the center line 227.

An elongated tab 263 formed to one end section of the clamping band 220 has a sufficient length to cover any gap that the driving wedges 240 and 250 can produce thereby to provide a continuous sealing band for producing a sealing force that acts radially outward.

As previously stated, this construction provides superior sealing, but is expensive to manufacture. This expense is not justified economically for use with seals of smaller diameter pipes. So toggle arrangements have continued to be used to effect the seals in such applications.

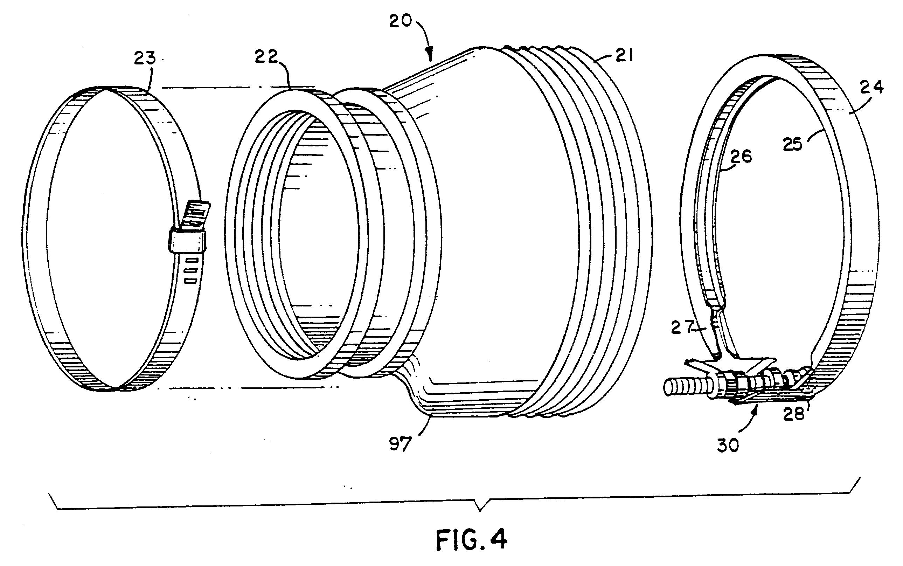

FIG. 4 discloses a clamping band and expansion mechanism that provides the advantages of the structure of FIG. 3 at costs comparable to those of clamping bands with toggle expanders. As shown in FIG. 4, a connector boot 20 having a similar configuration as the connector boot 204 in FIGS. 1 and 2, has a first end 21 adapted to be inserted into a core drill opening in a manhole riser and a second end 22 adapted for surrounding a pipe and being sealed thereto by a clamping band 23 that is similar to the clamping band 211 shown in FIG. 2.

An annular clamping band 24 in FIG. 4 has radially extending inturned lips 25 and 26 extending about the circumference thereof for strength. An expansion mechanism 30 is positioned between end sections 27 and 28. The structure of the expansion mechanism 30 is shown in more detail in FIG. 5.

More specifically the lip portions 25 and 26 on the band 24 rolled over to be parallel with the band and spaced therefrom over the length of the end sections 27 and 28. The end sections 27 and 28 therefore serve as guides for receiving wedge followers 31 and 32 respectively. As shown in FIG. 5 the wedge follower 31 has a shank portion 33 and a trapezoidal head portion 34. A stiffening rib 35 extends through the shank and the head along a center line 36. The wedge follower 32 has a similar structure with a trapezoidal head 37, a shank 38 and a stiffening rib 39. These wedge followers 31 and 32 are readily stamped from a planar stainless steel or similar metal thereby to be produced in quantity at low cost.

The expansion mechanism 30 additionally comprises driving wedges 40 and 41. In this particular embodiment the driving wedge 40 has an outer plate 42 and an inner plate 43. The inner plate is formed with a pair of spaced saddles 44 and 45 that provide a clearance for a bolt 46. The driving wedge 40 additionally has a generally trapezoidal shape with a leading edge 47 and divergent edge sections 50 and 51 that extend to a rear base portion 52. The edge sections 50 and 51 are formed as U-shaped channels to engage divergent edges 54 and 55 formed by the trapezoidal head sections 34 and 37. An aperture extends through the plates 42 and 43 intermediate the saddles 44 and 45 and the inner plate 43; tabs 56 and 57 are formed along edges parallel to an axis 60 about which the bolt 46 turns.

The driving wedge 41 has an identical structure and includes an outer plate 61 and an inner plate 62 formed with U-shaped channels 63 and 64 that define divergent edges. The channels 63 and 64 engage divergent edges 65 and 66 formed on the trapezoidal head portions 34 and 37 of the wedge followers 31 and 32. The driving wedge 41 has a standard hexagonal nut 70 located between spaced saddles 71 and 72. Tabs, described in detail later, on the driving wedge 41, which is identical to the driving wedge 40, engage the edges of the nut 70 thereby to prevent its rotation.

Both the driving wedges 40 and 41 are metal stampings. In this particular embodiment plates 42 and 43 are welded together as are the plates 61 and 62. However, the components of this expansion mechanism 30 are all inexpensive to manufacture. Moreover, a given set of mechanism components provide expansion mechanisms for bands 24 of different diameters. It is merely necessary to place the stamped wedge followers 31 and 32 and the driving wedges 40 and 41 in stamping dies to produce a radius of curvature for each of those pieces that corresponds to the radius of curvature of the band so the mechanism conforms to the band's profile and does not protrude therefrom. In the structure shown in FIG. 3, the use of such stamping operations to adapt the driving wedges 240 and 250 for different profiles could either close the clearance hole 254 or deform the cylinder 241 causing the integrity of the threaded connection to be lost. Threaded engagement in accordance with this invention, as shown in FIGS. 4 through 6, is limited solely on the integrity of a standard nut that is inserted after the structure is bent.

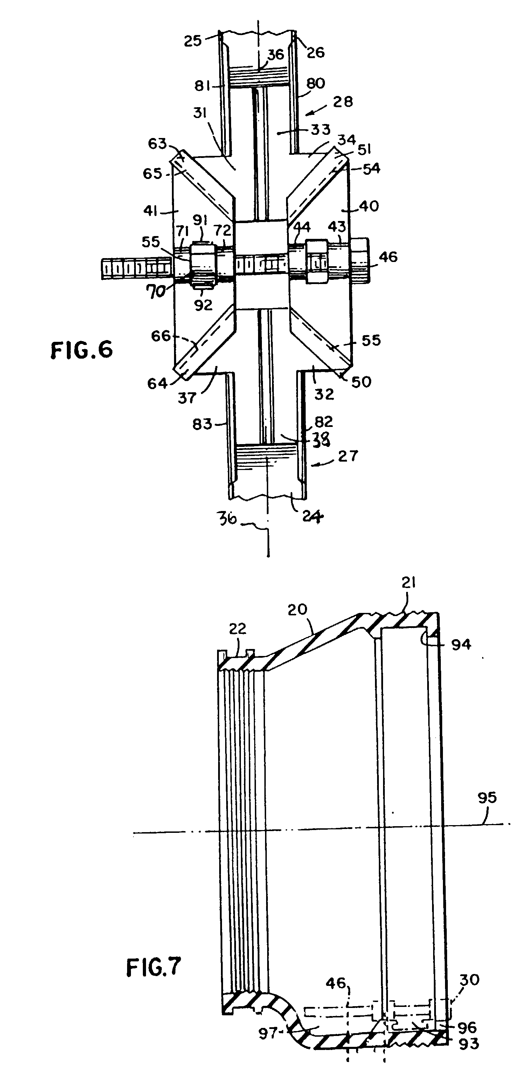

FIG. 6 discloses an assembled mechanism 30 intermediate the end sections 27 and 28 of the clamping band 24. As shown the end section 28 captures the wedge follower 31. The lips 25 and 26 are rolled parallel to the band 24 thereby to form channel sections 80 and 81 that engage the shank portion 33. The base of the head portion 34 abuts the ends of the channel sections 80 and 81. Similar channel sections 82 and 83 capture the shank portion 36 of the wedge follower 32 such that the base of the head portion 37 abuts the end of the channels 82 and 83.

In an assembled form, the U-shaped channels at divergent edges 50 and 51 overlie the diverging edges 55 and 54 of the wedge followers 32 and 31. Similarly diverging U-shaped channels at edges 63 and 64 engage and capture the diverging edge portions 65 and 66 respectively of the edge followers 31 and 32. The bolt 46 extends through the saddles 43 and 44, traverses the space between the driving wedges 40 and 41 and then passes through the saddles 71 and 72. As the bolt 46 is rotated in a tightening direction, it acts on nut 70 lying in the aperture of the driving wedge 41. Tabs 91 and 92 at the edges of the aperture prevent the nut 70 from rotating. The driving wedges 40 and 41 move toward each other and the center line 36. This applies a force to the wedge followers 31 and 32 that separates the end sections 27 and 28 along the axis 36. Force is applied from the base of the head portions 34 and 37 against the ends of the channel portions 80, 81, 82 and 83 to produce that displacement.

FIGS. 4 and 7 depict a connector boot 20 with an end section 21 and an end section 22 modified to provide improved operation with respect to the operating mechanism 30. More specifically, the boot 20 is modified by forming first and second pockets in the boot. As shown in FIG. 7, a first pocket is coextensive with a circumferential channel 94 that extends about the interior wall of the end section 21. This channel 94 locates the band 24 along an axis 95. The pocket 93 is coextensive with the mechanism and extends from an end surface 96. A second pocket 97 extends toward the end 22 over a circumferential area corresponding to the dimensions of the bolt. The pockets 93 and 97 allow the mechanism to be used even with small diameter pipes and with connector boots having large tapers. As the mechanism 30 extends and tightens, the bolt 46 will not penetrate or engage the material of the connector boot 20 thereby maintaining its integrity.

A tab 100, shown in phantom in FIG. 5, overlies the exterior of the band 24 at the gap between the end sections 27 and 28. This tab 100 assures an even application of pressure completely around the circumference of the connector boot.

Therefore, in accordance with this invention, there is disclosed an expansion mechanism for bands for effecting seals with sewer pipe connectors and the like that is simple and inexpensive to manufacture. It provides the superior sealing of more expensive prior art devices at the manufacturing costs of the less effective toggle expanders. A number of variations are possible; and it is the object of the appended claims to cover all variations and modifications.

## Claims

1. A device for clamping a flexible pipe connector to a manhole riser at an opening through a wall thereof, the clamping device comprising a clamping member (24) having a circular profile with a nominal radius of curvature and a circumferentially extending centre line (36) with spaced first and second end sections (27, 28), said clamping member having an outer surface for engaging the pipe connector and expansion means (30) for altering the separation between the first and second end sections (27, 28) thereby to alter the radius of curvature of the clamping member, whereby said expansion means (30) comprises:
A. first integral, planar follower means (31) and second integral, planar follower means (32) each having a shank portion (33,38) for being inserted along the centre line (36) into an end section (27,28) of the clamping band (24) and a trapezoidal head portion (34,37) with a base for overlying the end section and with the divergent planar edge portions (54,55,65,66) constituting the sides of the trapezoid, each said follower means being deformable to conform its outer surface to a radius corresponding to the nominal radius of curvature whereby said follower means can conform to the profile of the clamping band,
B. first integral wedge means (40) and second integral wedge means (41) adapted for lying in a spaced relationship along an axis (60) that is transverse to the centre line (36) to control the separation of said follower means (31,32), each of said first and second wedge means having a generally trapezoidal shape and having;
i . edge means (50,51,63,64) that diverge with respect to the transverse axis and that parallel said follower means edge portions for engaging said edge portions, and
ii. saddle means (44,45,71,72) located along the transverse axis, each of said wedge means being deformable to conform its outer surface to a radius corresponding to the nominal radius of curvature whereby said wedge means can conform to the profile of the clamping band, and
C. compression means (46, 70) having first and second separable components loosely captured by said saddle means in said first and second wedge means respectively for displacing said wedge means with respect to the centre line whereby said adjacent divergent edge means on said wedge means engage proximate ones of said planar edge portions on said follower means for increasing the separation between the first and second end sections as said compression means displaces said wedge means toward the centre line thereby to cause said clamping band to seal said flexible connector against the manhole riser.

2. A clamping device according to claim 1 characterized in that said compression means (46,70,91,92) further comprises bolt and nut means (46,70) for being threaded together, said nut means (70) being loosely captured between said saddle means (44,45,71,72) on one of said wedge means (40,41) such that this wedge means additionally comprises an aperture along the transverse axis between said saddle means for receiving said nut means and by tab means (91,92) at the edges of said aperture for preventing the rotation of said nut means (70) during rotation of said bolt means (46).

3. A clamping device according to any preceding claim characterized in that said saddle means further comprises U-shaped saddles.

4. A clamping device according to any preceding claim characterized in that each said follower means of said expansion means further comprises an integral member that is formed with a radius of curvature along the centre line corresponding to the radius of curvature of said clamping member whereby each said follower means conforms to the profile of said clamping member.

5. A clamping device according to any preceding claim characterized in that each said wedge means of said expansion means further comprises an integral member that is formed with a radius of curvature along the centre line corresponding to the radius of curvature of said clamping member whereby each said wedge means conforms to the profile of said clamping member.

6. A clamping device according to any preceding claim characterized in that each said follower means of said expansion means further comprises a shank portion (33,36) for insertion into each end section (27,28) of the clamping member and a trapezoidal head portion (34,37) having a base that overlies the end section, where the divergent edges (54,55,65,66) of said follower means constitute the sides of the trapezoidal head portion (34,37).

7. A clamping device according to any preceding claim characterized in that each said follower means (31,32) comprises a central reinforcing structure (35,39) formed integrally therewith coextensively with the centre line.

8. A clamping device according to any preceding claim characterized in that said divergent edge means of each said wedge means terminate with outwardly facing open channel means (63,64).

9. A clamping device according to any preceding claim characterized in that one of said wedge means has means for receiving said compression means and the other of said wedge means includes means for engaging said compression means.

10. Apparatus for connecting a pipe to a manhole riser at an opening through a wall thereof, said apparatus comprising:
A. a connector boot means (204) with a first circular end portion (209) for insertion in the opening of the manhole riser to be coextensive with portions of the wall, a second circular end portion (208) for receiving the pipe, and a central transition portion (210) interconnecting said first and second end sections, and
B. means (211) for clamping said second connector boot end section (208) to the pipe, characterized in that said apparatus comprises a clamping device according to any preceding claim for effecting a seal between said first circular end portion (209) and the wall of the manhole riser.

11. Apparatus for connecting a pipe to a manhole riser according to claim 10 further characterized in that said connector boot means has a first pocket means (94) formed at first circular end portion for receiving said expansion means.

12. Apparatus for connecting a pipe to a manhole riser according to claim 11 further characterized in that said connector boot means has a second pocket (97) angularly centered on said first pocket means and extending longitudinally into said central transition portion for receiving portions of said compression means.

## Patentansprüche

1. Klemmvorrichtung zum Anschließen eines flexiblen Rohrverbinders an eine in der Wand des Schachtrohres eines Mannloches vorhandene Öffnung, wobei die Klemmvorrichtung ein kreisringförmiges Klemmglied (24) mit einem Nenn-Krümmungsradius und in Umfangsrichtung verlaufender Mittellinie (36) aufweist, das auf Abstand liegende Enden (27, 28) und eine Außenfläche hat, die an dem Rohrverbinder zur Anlage kommt, mit einer Dehnvorrichtung (30) zum Verändern des Abstandes zwischen den beiden Enden (27, 28) und damit des Krümmungsradius des Klemmgliedes, wobei die Dehnvorrichtung (30) folgende Teile aufweist:
A. ein erstes einstückig ausgebildetes flaches Folgeelement (31) und ein zweites einstückig ausgebildetes flaches Folgeelement (32) mit einem Schaft (33, 38) zum Einsetzen entlang der Mittellinie (36) in ein Ende (27, 28) des Klemmbandes (24) und einem trapezförmigen Kopfteil (34, 37) mit einem das Ende überdeckenden Basisteil und die Seiten des Trapezes bildenden divergierenden flachen Rändern (54, 55, 65, 66), wobei jedes Folgeelement derart verformbar ist, daß seine Außenfläche eine Krümmung mit einem dem Nenn-Krümmungsradius entsprechenden Radius erhält, so daß das Folgeelement der Form des Klemmbandes angepaßt ist,
B. einem ersten einstückigen Keil (40) und einem zweiten einstückigen Keil (41), die entlang einer quer zur Mittellinie (36) verlaufenden Achse (60) mit Abstand zueinander anzuordnen sind und zum Einstellen des Abstandes zwischen den Folgeelementen (31, 32) dienen, wobei jeder der beiden Keile im wesentlichen trapezförmig ist und folgende Teile aufweist:
i. Ränder (50, 51, 63, 64), die in bezug auf die Querachse divergieren und zur Aufnahme der Ränder des Folgeelementes in Parallellage zu diesen Rändern zu bringen sind, und
ii. Schellen (44, 45, 71, 72), die entlang der Querachse angeordnet sind, wobei jeder Keil derart verformbar ist, daß seine Außenfläche eine Krümmung mit einem dem Nenn-Krümmungsradius entsprechenden Radius erhält, so daß der Keil der Form des Klemmbandes angepaßt ist, und
C. einer Spannvorrichtung (46, 70) mit zwei separierbaren Elementen, die von den Schellen in dem ersten bzw. zweiten Keil mit Spiel umfaßt sind und dazu dienen, die Keile in bezug auf die Mittellinie zu verschieben, wobei die divergierenden Ränder der Keile mit den jeweils benachbarten flachen Rändern der Folgeelemente in Eingriff kommen, um den Abstand zwischen den beiden Klemmbandenden dadurch zu vergrößern, daß die Spannvorrichtung die Keile in Richtung auf die Mittellinie verschiebt und dadurch bewirkt, daß das Klemmband den flexiblen Rohrverbinder gegen das Schachtrohr des Mannloches abdichtet.

2. Klemmvorrichtung nach Anspruch 1,
dadurch gekennzeichnet, daß die Spannvorrichtung (46, 70, 91, 92) einen Bolzen (46) und eine mit ihm zu verschraubende Mutter (70) aufweist, die mit Spiel zwischen den Schellen (44, 45, 71, 72) eines der Keile (40, 41) gehalten ist, der außerdem eine sich zwischen den Schellen entlang der Querachse erstreckende Öffnung zur Aufnahme der Mutter aufweist, und wobei an den Rändern der Öffnung Lappen (91, 92) vorhanden sind, um ein Mitdrehen der Mutter (70) während der Drehung des Bolzens (46) zu verhindern.

3. Klemmvorrichtung nach einem der vorhergehenden Ansprüche,
dadurch gekennzeichnet, daß die Schellen U-förmig sind.

4. Klemmvorrichtung nach einem der vorhergehenden Ansprüche,
dadurch gekennzeichnet, daß jedes Folgeelement der Dehnvorrichtung ein einstückiges gekrümmtes Teil aufweist, dessen Krümmungsradius entlang der Mittellinie dem Krümmungsradius des Klemmgliedes entspricht, so daß jedes Folgeelement der Form des Klemmgliedes angepaßt ist.

5. Klemmvorrichtung nach einem der vorhergehenden Ansprüche,
dadurch gekennzeichnet, daß jeder Keil der Dehnvorrichtung ein einstückiges gekrümmtes Teil aufweist, dessen Krümmungsradius entlang der Mittellinie dem Krümmungsradius des Klemmgliedes entspricht, so daß jeder Keil der Form des Klemmgliedes angepaßt ist.

6. Klemmvorrichtung nach einem der vorhergehenden Ansprüche,
dadurch gekennzeichnet, daß jedes Folgeelement der Dehnvorrichtung einen Schaft (33, 36) zum Einsetzen in eines der Enden (27, 28) des Klemmgliedes sowie einen trapezförmigen Kopfteil (34, 37) mit einem das Ende überdeckenden Basisteil aufweist, wobei die divergierenden Ränder (54, 55, 65, 66) des Folgeelementes die Seiten des trapezförmigen Kopfteiles (34, 37) bilden.

7. Klemmvorrichtung nach einem der vorhergehenden Ansprüche,
dadurch gekennzeichnet, daß jedes Folgeelement (31, 32) eine einstückig mit ihm ausgebildete mittlere Verstärkung (35, 39) aufweist, die sich entlang der Mittellinie erstreckt.

8. Klemmvorrichtung nach einem der vorhergehenden Ansprüche,
dadurch gekennzeichnet, daß die divergierenden Ränder jedes Keiles jeweils in einem nach außen gerichteten offenen U-Profil (63, 64) enden.

9. Klemmvorrichtung nach einem der vorhergehenden Ansprüche,
dadurch gekennzeichnet, daß der eine Keil zur Aufnahme der Spannvorrichtung und der andere Keil zum Eingriff mit der Spannvorrichtung ausgebildet ist.

10. Vorrichtung zum Anschließen eines Rohres an eine in der Wand des Schachtrohres eines Mannloches vorhandene Öffnung, mit:
A. einer Verbindungsmuffe (204) mit einem ersten kreisrunden Endabschnitt (209) zum Einsetzen in die Öffnung des Schachtrohres eines Mannloches, derart, daß er sich mit Teilen der Wandung deckt, einem zweiten kreisrunden Endabschnitt (208) zur Aufnahme des Rohres und einem mittleren, die beiden Endabschnitte verbindenden Übergangsabschnitt (210), und
B. einer Vorrichtung (211) zum Anklemmen des zweiten Endabschnittes (208) der Verbindungsmuffe an das Rohr,
dadurch gekennzeichnet, daß die Anschlußvorrichtung eine Klemmvorrichtung nach einem der vorhergehenden Ansprüche aufweist, um zwischen dem ersten kreisrunden Endabschnitt (209) und der Wand des Schachtrohres des Mannloches eine Abdichtung zu erreichen.

11. Vorrichtung zum Anschließen eines Rohres an das Schachtrohr eines Mannloches nach Anspruch 10,
dadurch gekennzeichnet, daß die Verbindungsmuffe eine an ihrem ersten kreisrunden Endabschnitt ausgebildete erste Tasche (94) zur Aufnahme der Dehnvorrichtung aufweist.

12. Vorrichtung zum Anschließen eines Rohres an das Schachtrohr eines Mannloches nach Anspruch 11,
dadurch gekennzeichnet, daß die Verbindungsmuffe eine zweite Tasche (97) aufweist, die um einen Winkel versetzt zu der ersten Tasche angeordnet ist und sich in Längsrichtung in den mittleren Übergangsabschnitt hinein erstreckt, um Teile der Spannvorrichtung aufzunehmen.

## Revendications

1. Dispositif pour serrer un connecteur de tuyau flexible à une conduite montante de puits d'accès au niveau d'une ouverture ménagée à travers une paroi de celle-ci, le dispositif de serrage comprenant un élément de serrage (24) qui a un profil circulaire de rayon de courbure nominal et une ligne centrale (36) s'étendant circonférentiellement munie d'une première et d'une deuxième parties d'extrémité (27, 28), ledit élément de serrage ayant une surface extérieure destinée à enclencher le connecteur de tuyau et un moyen d'expansion (30) permettant de modifier la séparation entre les première et seconde parties (27, 28) de façon à changer le rayon de courbure de l'élément de serrage, où ledit moyen d'expansion (30) comprend :
A. un premier moyen suiveur plan (31) incorporé et un second moyen suiveur plan (32) incorporé, chacun ayant une partie de tige (33, 38) destinée à être insérée le long de la ligne centrale (36) dans une partie d'extrémité (27, 28) du collier de serrage (24) et une partie de tête trapézoïdale (34, 37) comportant une base destinée à se superposer à la partie d'extrémité et dont les parties de bordure divergente plane (54, 55 65, 66) constituent les côtés du trapèze, chacun des dits moyens suiveurs pouvant se déformer de façon à ce que leur surface extérieure puisse se conformer à un rayon de courbure correspondant au rayon de courbure nominal et que ledit moyen suiveur puisse se conformer au profil du collier de serrage,
B. un premier moyen de clavette incorporé (40) et un second moyen de clavette incorporé (41) prévus pour être disposés en étant écartés le long d'un axe (60) qui est transversal à la ligne centrale (36) de façon à commander la séparation des dits moyens suiveurs (31, 32), chacun des dits premier et second moyens de clavette ayant une forme généralement trapézoïdale et disposant ;
i. de moyens de bordure (50, 51, 63, 64) qui divergent par rapport à l'axe transversal et qui sont parallèles aux parties de bordure des dits moyens suiveurs de façon à enclencher lesdites parties de bordure, et
ii. de moyens de sellette (44, 45, 71, 72) situés le long de l'axe transversal, chacun des dits moyens de clavette pouvant se déformer de façon à conformer sa surface extérieure à un rayon de courbure qui correspond au rayon de courbure nominal et à ce que lesdits moyens de clavette puissent se conformer au profil du collier de serrage, et
C. un moyen de compression (46, 70) dont les premier et second composants séparables sont pris respectivement librement par lesdits moyens de sellette dans lesdits premier et second moyens de clavette pour déplacer lesdits moyens de clavette par rapport à la ligne centrale, pour que lesdits moyens de bordure divergente adjacents aux dits moyens de clavette enclenchent celle des dites parties de bordure planes des dits moyens suiveurs qui sont proches de façon à augmenter la séparation entre les première et seconde parties d'extrémité lorsque ledit moyen de compression déplace lesdits moyens de clavette vers la ligne centrale afin que ledit collier de serrage serre ledit connecteur flexible sur la conduite montante de puits d'accès.

2. Dispositif de serrage selon la revendication 1 caractérisé en ce que ledit moyen de compression (46, 70, 91, 92) comprend en outre un moyen de boulon et d'écrou (46, 70) destinés à être enfilés l'un dans l'autre, ledit moyen d'écrou (70) étant pris librement entre lesdits moyens de sellette (44, 45, 71, 72) d'un desdits moyens de clavette (40, 41) de façon à ce que ce moyen de clavette comprenne en plus une ouverture le long de l'axe transversal entre lesdits moyens de sellette, ouverture qui est destinée à recevoir ledit moyen d'écrou et des moyens de languette (91, 92) disposés sur les bords de ladite ouverture pour empêcher la rotation dudit moyen d'écrou (70) pendant la rotation dudit moyen de boulon (46).

3. Dispositif de serrage selon l'une quelconque de revendications précédentes caractérisé en ce que lesdits moyens de sellette comprennent en outre des sellettes en forme de U.

4. Dispositif de serrage selon l'une quelconque des revendications précédentes caractérisé en ce que chacun des dits moyens suiveurs dudit moyen d'expansion comprend en outre un élément incorporé dont le rayon de courbure le long de la ligne centrale correspond au rayon de courbure dudit élément de serrage, pour que chacun des dits éléments suiveurs se conforme au profil du dit élément de serrage.

5. Dispositif de serrage selon l'une quelconque des revendications précédentes caractérisé en ce que chacun des dits moyens de clavette dudit moyen d'expansion comprend en outre un élément incorporé dont le rayon de courbure le long de la ligne centrale correspond au rayon de courbure du dit collier de serrage, pour que chacun des dits moyens de clavette se conforme au profil du dit élément de serrage.

6. Dispositif de serrage selon l'une quelconque des revendications précédentes caractérisé en ce que chacun des dits moyens suiveurs dudit moyen d'expansion comprend en outre une partie de tige (33, 36) destinée à être insérée dans chaque partie d'extrémité (27, 28) de l'élément de serrage et une partie de tête trapézoïdale (34, 37) ayant une base qui se superpose à la partie d'extrémité, dans lequel les bords divergents (54, 55, 65, 66) des dits moyens suiveurs forment les côtés de la partie de tête trapézoïdale (34, 37).

7. Dispositif de serrage selon l'une quelconque des revendications précédentes caractérisé en ce que chacun des dits moyens suiveurs (31, 32) comprend une structure centrale de renforcement (35, 39) incorporée à celui-ci et s'étendant conjointement avec la ligne centrale.

8. Dispositif de serrage selon l'une quelconque des revendications précédentes caractérisé en ce que lesdits moyens de bordure divergente de chacun des dits moyens de clavette se terminent avec des moyens de canal ouverts vers l'extérieur (63, 64).

9. Dispositif de serrage selon l'une quelconque des revendications précédentes caractérisé en ce qu'un des dits moyens de clavette dispose d'un moyen permettant de recevoir ledit moyen de compression et l'autre des dits moyens de clavette comporte un moyen permettant d'enclencher ledit moyen de compression.

10. Appareil destiné à relier un tuyau à une conduite montante de puits d'accès au niveau d'une ouverture ménagée à travers une paroi de celle-ci, ledit appareil comprenant :
A. un moyen de botte de protection de connecteur (204) disposant d'une première partie d'extrémité circulaire (209) destinée à être insérée dans l'ouverture de la conduite montante de façon à s'étendre conjointement aux parties de la paroi, une seconde partie d'extrémité circulaire (208) destinée à recevoir le tuyau, et une partie centrale de transition (210) reliant lesdites première et seconde parties d'extrémité, et
B. un moyen (211) permettant de serrer ladite partie d'extrémité (208) de la botte de protection de connecteur au tuyau, caractérisé en ce que ledit appareil comprend un dispositif de serrage selon l'une quelconque des revendications précédentes pour constituer une garniture étanche entre ladite première partie d'extrémité circulaire (209) et la paroi de la conduite montante de puits d'accès.

11. Appareil destiné à relier un tuyau à une conduite montante de puits d'accès selon la revendication 10, caractérisé en outre en ce que ledit moyen de botte de protection de connecteur dispose d'un premier moyen de poche (94) constitué sur la première partie d'extrémité circulaire et destiné à recevoir ledit moyen d'expansion.

12. Appareil destiné à relier un tuyau à une conduite montante de puits d'accès selon la revendication 11, caractérisé en outre en ce que ledit moyen de botte de protection de connecteur dispose d'un second moyen de poche (97) centré angulairement sur ledit premier moyen de poche et s'étendant longitudinalement dans ladite partie centrale de transition de façon à recevoir les parties dudit moyen de compression.
